(19) **Europäisches Patentamt / European Patent Office / Office européen des brevets**

(11) **EP 1 722 924 B1**

(12) **FASCICULE DE BREVET EUROPEEN**

(45) Date de publication et mention
de la délivrance du brevet:
**09.03.2016 Bulletin 2016/10**

(51) Int Cl.:
**B24B 13/005** *(2006.01)*     **B24B 9/14** *(2006.01)*
**G01M 11/02** *(2006.01)*     **G02C 13/00** *(2006.01)*

(21) Numéro de dépôt: **04821748.3**

(22) Date de dépôt: **19.10.2004**

(86) Numéro de dépôt international:
**PCT/FR2004/002668**

(87) Numéro de publication internationale:
**WO 2005/093495 (06.10.2005 Gazette 2005/40)**

(54) **DISPOSITIF CENTREUR-BLOQUEUR D'UNE LENTILLE OPHTALMIQUE DE LUNETTES, METHODE DE DETECTION AUTOMATIQUE ET METHODES DE CENTRAGE MANUEL ASSOCIEES**

VORRICHTUNG ZUM ZENTRIEREN/FESTKLEMMEN EINES BRILLENGLASES, ZUGEHÖRIGE VERFAHREN ZUR MANUELLEN ZENTRIERUNG UND VERFAHREN ZUR AUTOMATISCHEN ERFASSUNG

DEVICE FOR CENTRING/CLAMPING AN OPHTHALMIC SPECTACLE LENS, ASSOCIATED MANUAL CENTRING METHODS AND AUTOMATIC DETECTION METHOD

(84) Etats contractants désignés:
**AT BE BG CH CY CZ DE DK EE ES FI FR GB GR HU IE IT LI LU MC NL PL PT RO SE SI SK TR**

(30) Priorité: **24.02.2004 FR 0401857**

(43) Date de publication de la demande:
**22.11.2006 Bulletin 2006/47**

(73) Titulaire: **ESSILOR INTERNATIONAL (Compagnie Générale d'Optique)**
**94227 Charenton (FR)**

(72) Inventeurs:
• **DIVO, Fabien**
**94227 Charenton (FR)**
• **BOUTINON, Stéphane**
**94227 Charenton (FR)**

(74) Mandataire: **Chauvin, Vincent et al**
**Coralis**
**14/16, rue Ballu**
**75009 Paris (FR)**

(56) Documents cités:
EP-A- 1 167 942     WO-A1-02/16902
US-A- 1 873 249     US-A- 4 330 203
US-A- 5 505 654     US-A- 5 523 836
US-A1- 2002 021 437

EP 1 722 924 B1

**Description**

DOMAINE TECHNIQUE AUQUEL SE RAPPORTE L'INVENTION

La présente invention concerne de manière générale le montage des lentilles ophtalmiques dans leur monture.

Elle concerne plus particulièrement un dispositif centreur adapté à détecter automatiquement la position d'une ou plusieurs marques d'une lentille ophtalmique et en particulier la position de la ou des marques permettant de repérer un référentiel de centrage et/ou d'axage d'une lentille ophtalmique.

Elle concerne également des méthodes de détection automatique de la position de telles marques et en particulier d'un repère de centrage et/ou d'axage d'une lentille ophtalmique et deux méthodes de centrage manuel d'une lentille ophtalmique à l'aide d'un tel dispositif centreur-bloqueur.

ARRIERE-PLAN TECHNOLOGIQUE

Les dispositifs centreur-bloqueurs sont des appareils courants dans le domaine de l'optique. Ils interviennent dans le processus de fabrication d'une paire de lunettes, juste avant l'usinage des lentilles ophtalmiques pour les adapter à la forme de la monture de lunettes sélectionnée.

Usuellement, une lentiile ophtalmique « brute » se présente sous la forme sensiblement circulaire d'un diamètre surfaisant pour pouvoir être montée convenablement dans le cercle de la monture choisie.

Un dispositif centreur-bloqueur est alors utilisé pour fixer sur la lentille ophtalmiques concernée un pion de préhension généralement dénommé « gland ».

Ce pion de préhension servira, dans une étape ultérieure de fabrication, à entraîner la lentille ophtalmique en rotation pour procéder à son usinage.

La pose du pion de préhension sur la face avant de la lentille ophtalmique est réalisée en un point déterminé par le calcul en fonction notamment de la position du « centre optique » (au sens large du terme) ou plus généralement du point de centrage de la lentille, de la forme de la monture choisie et de certaines caractéristiques du porteur, à savoir son écart ou demi-écart pupillaire ainsi que la hauteur de montage (hauteur des pupilles par rapport à la partie inférieure des cercles de la monture).

Le positionnement ou centrage convenable de la lentille dans la monture comporte plusieurs composantes:

- Il faut positionner le point de centrage de la lentille (centre optique pour un unifocal, point fronto central, marquage de centrage pour une lentille progressive marquée, point déterminé à partir des microgravures pour une lentille progressive quelconque, point déterminé à partir de la pastille ou point marqué pour une lentille double ou triple foyer) en face de la pupille de l'oeil. La connaissance de la forme droite (resp.gauche) de la monture lue auparavant sur un lecteur, et de la valeur des demi-écarts et hauteurs de l'oeil droit (resp. gauche) permet de savoir où est la pupille de l'oeil droit (resp. gauche) dans cette forme. Tout décalage entre le point de centrage de la lentille et la pupille de l'oeil entraîne des effets prismatiques indésirables pour le porteur, et donc une gêne. Ces effets sont d'autant plus gênants que la lentille est de forte puissance.
- Il faut orienter l'axe de la lentille conformément à la prescription ou à la typologie de la lentille. Dans le cas d'uns lentille unifocale cylindrique, l'axe du cylindre sur la lentille montée doit correspondre à l'axe prescrit. Tout décalage d'axe entraîne à minima un défaut de correction (astigmatisme résiduel), défaut d'autant plus gênant que le cylindre est fort. Dans le cas d'une lentille progressive, l'axe de la lentille (marqué, ou défini par les microgravures) doit être horizontal pour respecter le mode de montage de ce type de lentille. Dans le cas d'une lentille double ou triple foyer, la pastille doit être horizontale non seulement pour des raisons physiologique (défaut de correction), mais aussi pour des raisons esthétiques.
- Il faut vérifier que le verre est suffisamment grand pour tenir dans la monture.
- Il faut vérifier que la correction de près (pour une lentille double ou triple foyer ou progressive) se trouve bien dans la monture. Ceci se comprend aisément d'un point de vue physiologique (le porteur doit avoir « accès » à la zone de vision de près de la lentille pour être corrigé correctement). De plus, pour les lentilles double ou triple foyers, la pastille ne doit pas être tronquée là aussi une raison esthétique.
- Il faut vérifier que la vision de loin se trouve bien dans la monture, pour les même raisons physiologiques. Le respect de ces différentes composantes de positionnement nécessite une mesure et/ou une visualisation précise de la position du point de centrage, de l'axe dé la lentille, du contour de la lentille, de la position des points de références pour la vision de près et pour la vision de loin (dans le cas d'une lentille progessive).

Un dispositif centreur-bloqueur est généralement adapté à déterminer la position d'un centre optique dans le cas d'une lentille unifocale, la position d'un des centres optiques ou d'un point quelconque remarquable, dit de centrage, dans le cas d'une lentille bifocale ou trifocale, et est adapté également à déterminer certains parmi les repères que le fabricant fait usuellement figurer sur la surface des lentilles progressives. Lorsque le dispositif centreur est également bloqueur en ce sens qu'il possède des moyens pour déposer manuellement ou automatiquement sur la lentille un pion de centrage matérialisant le préférentiel détecté de la lentille, le dispositif est de plus adapté à déterminer par calcul un point de la surface de la lentille définissant l'emplacement au niveau duquel sera posé un pion de préhension.

Que ce soit en mode automatique ou en mode manuel, la plupart des dispositifs centreur-bloqueurs déjà connus détectent la position du centre optique ou des repères de centrage et/ou d'axage d'une lentille ophtalmique en éclairant ladite lentille au moyen d'un faisceau lumineux (en général un faisceau collimaté) et en recueillant le faisceaux lumineux transmis au travers elle sur un écran de projection translucide. Une caméra placée derrière cet écran acquiert l'image projetée et l'affiche ensuite sur un périphérique d'affichage tel qu'un écran CRT ou LCD. A l'image de la lentille ainsi générée, est superposée la forme de la monture afin que l'opérateur réalise le centrage dans toutes ses composantes, de manière automatique ou manuelle. En mode automatique, des moyens de traitement électroniques repèrent l'ombre des repères de centrage et/ou d'axage pour définir un référentiel de la monture et marquer ce référentiel ou déposer sur la monture un pion ou gland de référence ou centrage dans la configuration voulue pour matérialiser un référentiel de la lentille à partir duquel il sera procédé au détourage de la lentille selon le contour souhaité.

De tels dispositifs commettent une erreur de détection des positions réelles des marques de la lentille et en particulier de la position du centre optique ou des repères de centrage et/ou d'axage (typiquement la croix de montage, les points de marquage issus d'un centrage sur un frontofocomètre, les traits horizontaux, les microgravures, le segment de délimitation de la pastille d'une lentille double foyer non progressive) de la lentille ophtalmique. Il en est de même des cercles, dits de mesure fronto, localisant les points de référence pour la vision de près et pour la vision de loin).

Cette erreur résulte des déviations prismatiques de l'ombre des repères, induites par la lentille elle-même, qui dépendent des puissances optiques sphérique, cylindrique et prismatique de la lentille ophtalmique dans la zone du repère considéré. En raison de ces déviations, l'image projetée des marques que porte la face avant convexe de la lentille est déformée par la lentille au travers d'elle-même, ce qui a pour effet de fausser les différentes composantes de centrage et risque d'aboutir à un montage incorrect, voire impossible.

Par exemple, une lentille de puissance positive génère sur l'écran de projection une image globale contractée des marques de la lentille. Inversement, une lentille de puissance négative génère une image condensés. Si la lentille ophtalmique à centrer présente une puissance prismatique latérale dans la zone du repère considéré, l'ombre du repère sur l'image apparaîtra décalée latéralement, dans ta direction et dans la mesuré correspondant à l'angle de ce prisme, par rapport à la position réelle du repère sur la face avant de ladite lentille. De même, si la lentille ophtalmique présente une puissance torique, ces dispositifs centreur-bloqueurs peuvent commettre une erreur de détection du repère d'axage si l'axe formé par les repères et l'axe principal du tore correspondant ne sont pas parallèles ou perpendiculaires entre eux.

En revanche, le contour de la lentille n'est jamais déformé puisqu'il ne subit aucun effet prismatique. Il en résulte un décalage relatif de la projection de ce contour par rapport aux projections décalées des marques de la lentille.

Ces erreurs sont d'autant plus importantes que les effets prismatiques sont forts et que l'écran de projection est éloigné de la lentilles.

Pour tenter de remédier à ce problème d'erreur de détection des marques d'une lentille, on a déjà proposé de minimiser les erreurs de décalage commises en rapprochant l'écran de projection de la lentille. Mais ce rapprochement peut dans certains cas dégrader la précision intrinsèque du dispositif et les compromis envisagés restent insatisfaisants.

Une autre solution a été avancée dans le document EP 0 409 760 qui propose un dispositif centreur-bloqueur dans lequel, d'une part, le trajet optique du flux lumineux permettant de détecter la position du centre optique ou des repères de centrage de la lentille est inversé, à savoir la lentille ophtalmique est éclairée par l'arrière (sachant que les repères de centrage et/ou d'axage sont prévus sur la face avant de celle-ci) et le flux lumineux transmis par ladite lentille est recueilli du côté de la face avant de celle-ci, et, d'autre part, l'écran de projection dépoli, permettant de recueillir le flux lumineux transmis en regard des moyens d'acquisition, est disposé au plus près de la face avant de la lentille à centrer de manière à limiter le trajet des rayons lumineux déviés avant d'être focalisés vers les moyens d'acquisition.

Toutefois cela nécessite que l'écran de projection dépoli soit monté mobile sur le bâti du dispositif pour être escamoté de façon à permettre la dépose du pion de préhension à l'endroit déterminé de la face avant de la lentille ophtalmique. Ce montage complexe de l'écran de projection sur le bâti du dispositif augmente l'encombrement du dispositif, son coût de fabrication et surtout ne permet pas d'obtenir une précision pérenne des mesures.

Le document EP1167942 décrit un dispositif pour l'acquisition de l'ombre d'une lentille ophtalmique comportant une marque, par exemple un décroché entre deux zones de focales différentes. Ce dispositif comprend des moyens d'acquisition de l'ombre de la lentille illuminée par des moyens d'éclairement ainsi que des moyens de mesure du pouvoir de déviation exercée par ladite lentille sur au moins un rayon lumineux.

Ce dispositif permet simplement de regrouper les deux fonctions d'acquisition de l'ombre de la lentille et de mesure de son pouvoir de déviation en un seul dispositif. Il ne comporte aucun moyen de correction de l'ombre acquise de la lentille.

OBJET DE L'INVENTION

Afin de remédier aux inconvénients précités de l'état de la technique, la présente invention propose de corriger les erreurs de déformation de l'image projetée des différentes marques de la lentille afin de permettre une vérification automatique ou manuelle précise de la configuration géométrique des marquages de la lentille. L'invention propose également, plus spécifiquement, d'utiliser cette correction pour assurer, de manière automatique ou manuelle assistée, un centrage et/ou une vérification précis du positionnement de la lentille dans son ensemble, ou d'un point spécifique de la lentille, dans le contour de monture auquel elle est destinée.

A cet effet, on prévoit selon l'invention un dispositif d'acquisition corrigée de l'ombre d'une lentille ophtalmique présentant une ou plusieurs marques (PC) conforme à la revendication 1.

D'autres caractéristiques avantageuses et non limitatives du dispositif conforme à l'invention sont les suivantes :

- ladite géométrie corrigée correspond sensiblement à la géométrie que présenterait l'ombre de ladite lentille si cette lentille ne possédait aucun pouvoir de déviation;
- les moyens de mesure sont aptes à mesurer le pouvoir déviateur qu'exerce la lentille ophtalmique sur au moins trois rayons lumineux traversant la lentille en trois points non-alignés;
- les moyens de mesure sont du type procédant par déflectométrie ;
- les moyens de mesure par déflectométrie comprennent au moins un séparateur de faisceau disposé entre le moyen d'accueil de lentille et les moyens d'acquisition, ce qui permet de réaliser des mesures déflectométriques précises afin de mesurer avec une bonne précision les centres optiques et les axes d'astigmatisme des lentilles unifocales, ainsi que les puissances frontales des lentille de tout type;
- les moyens de mesure par déflectométrie comprennent lesdits moyens d'acquisitions ;
- les moyens d'acquisition comprennent un écran de projection et un système d'acquisition d'image agencé pour capter l'image de cet écran de projection ;
- ledit moyen d'accueil, lesdits moyens d'éclairement, lesdits moyens d'acquisition et lesdits moyens de mesure sont fixes les uns par rapport aux autres
- il comporte un trajet optique unique entre lesdits moyens d'éclairement et lesdits moyens d'acquisition;
- ledit séparateur de faisceau est un support pour au moins un signe disposé entre ledit moyen d'accueil et lesdits moyens d'acquisition et d'analyse et dans lequel la loi de correction géométrique calculée par ledit système électronique et informatique est fonction de l'ombre déformée du signe perçue par les moyens d'acquisition;
- le support de signe est activable et désactivable ;
- ledit support de signe est un écran actif transparent apte à afficher sélectivement ledit signe opaque ;
- ledit écran actif est un écran à cristaux liquides;
- ledit support de signe comprend une trame de motifs opaques répétés et réguliers;
- ledit support de signe comprend une matrice d'Hartmann ;
- ledit support de signe comporte une figure géométrique dont la dimension hors tout est comprise entre 2 et 10 mm ;
- la figure géométrique couvre une superficie comprise entre 3 et 80 mm$^2$ ;
- la figure géométrique est de forme distincte d'un point ou d'une croix, apte à être distinguée d'un repère marqué d'une lentille ophtalmique ;
- la figure géométrique est un filaire, préférentiellement un polygone, tel qu'un triangle ;
- la figure géométrique est un cercle ou un ovale ;
- les moyens de mesure sont du type procédant par d'interférométrie ;
- il comprend des moyens pour poser un pion de préhension à un emplacement déterminé par calcul sur la face avant de ladite lentille ophtalmique;
- lesdits moyens de pose du pion de préhension sont des moyens automatique
- lesdits moyens de pose du pion de préhension sont des moyens de manipulation à commande manuelle;
- il comporte des moyens d'affichage pilotés par le système électronique et informatique pour afficher la géométrie au point partiellement corrigée de l'ombre perçue par les moyens d'acquisition ;
- le système électronique et informatique pilote les moyens d'affichage pour afficher le contour de la lentille sans lui appliquer le calcul de correction géométrique;
- le système électronique et informatique comporte des instructions de reconnaissance d'image aptes à reconnaître l'ombre d'une marque de la lentille ophtalmique perçue par les moyens d'acquisition et à lui appliquer ledit calcul de correction géométrique pour en déduire sa position corrigée dans un référentiel connu correspondant sensiblement à la position que présenterait dans ce référentiel l'ombre de cette marque en l'absence de pouvoir de déviation de la lentille ;
- les instructions de reconnaissance d'image sont aptes à reconnaître l'ombre d'une marque de centrage et/ou d'axage de la lentille ophtalmique perçue par les moyens d'acquisition ;
- les instructions de reconnaissance d'image sont aptes à reconnaître l'ombre d'une marque de référence pour la vision de loin ou la vision de prés de la lentille ophtalmique perçue par les moyens d'acquisition.

L'invention a également pour objet une méthode d'acquisition corrigée de l'ombre d'une lentille ophtalmique présentant une ou plusieurs marques, comportant les étapes suivantes :

- éclairer la lentille par un faisceau lumineux,
- mesurer le pouvoir de déviation optique qu'exerce la lentille ophtalmique sur au moins un rayon lumineux incident dudit faisceau,
- déduire du pouvoir de déviation mesuré, par calcul, une géométrie corrigée d'une partie au moins de l'ombre de ladite lentille ophtalmique éclairée par ledit faisceau lumineux.

D'autres caractéristiques avantageuses et non limitatives de la méthode conforme à l'invention sont les suivantes :

- ladite géométrie corrigée correspond sensiblement à la géométrie que présenterait l'ombre de ladite lentille si cette lentille ne possédait aucun pouvoir déviateur ;
- on mesure le pouvoir de déviation qu'exerce la lentille ophtalmique sur au moins trois rayons lumineux distincts, traversant la lentille en trois points non alignés ;
- pour mesurer le pouvoir de déviation de la lentille ophtalmique, on utilise des moyens de déflectométrie ;
- pour mesurer le pouvoir de déviation de la lentille ophtalmique, on éclaire la lentille ophtalmique et on recueille l'ombre de la lentille sur des moyens d'acquisition, un séparateur de faisceau étant disposé entre lesdits moyens d'acquisition et la lentille ;
- pour mesurer le pouvoir de déviation de la lentille ophtalmique, on utilise des moyens d'interférométrie;
- la lentille ophtalmique étant du type multifocale, la correction géométrique est appliquée à au moins une marque de référence pour la vison de près ou de loin de la lentille ophtalmique multifocale pour obtenir une position corrigée de cette marque ;
- la correction géométrique est appliquée à l'ombre d'au moins une marque de centrage et/ou d'axage de la lentille ophtalmique pour obtenir une position corrigée de cette ombre ;
- on affiche sur un écran de visualisation une image virtuelle représentative du contour souhaité après détourage de la lentille, et on repère la position de cette image de contour par rapport à la position corrigée de l'ombre de la marque de centrage de la lentille ;
- comportant une étape d'affichage de la géométrie corrigée de l'ombre de la lentille sur un écran de visualisation ;
- lors de ladite étape d'affichage, l'ombre du contour de la lentille est affichée sur un écran de visualisation sans lui appliquer le calcul de correction géométrique.
- elle comporte une étape de reconnaissance de l'ombre d'une marque de la lentille ophtalmique et une étape d'application, à cette ombre de marque, du calcul de correction géométrique pour en déduire sa position corrigée dans un référentiel connu, cette position corrigée correspondant sensiblement à la position que présenterait dans ce référentiel l'ombre de cette marque en l'absence de pouvoir de déviation de la lentille ;
- elle est appliquée au centrage automatique de la lentille et, dans ce cas, l'ombre reconnue est celle d'une marque de centrage et/ou d'axage de la lentille ophtalmique,

déviations prismatiques induites par la lentille à centrer.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 est une vue générale en perspective d'un dispositif centreur-bloqueur selon l'invention;
- la figure 2 est un schéma optique du dispositif de la figure 1 ;
- la figure 3 est une vue schématique de dessus des motifs du support de signe transparent du dispositif de la figure 1,
- la figure 4 est un algorithme d'une méthode de centrage selon l'invention avec l'affichage furtif du support de signe transparent du dispositif de la figure 1,
- la figure 5A est un schéma du référentiel de la caméra,
- la figure 5B est un schéma du référentiel d'affichage, et
- la figure 5C est un schéma superposant les deux référentiels des figures 5A et 5B.

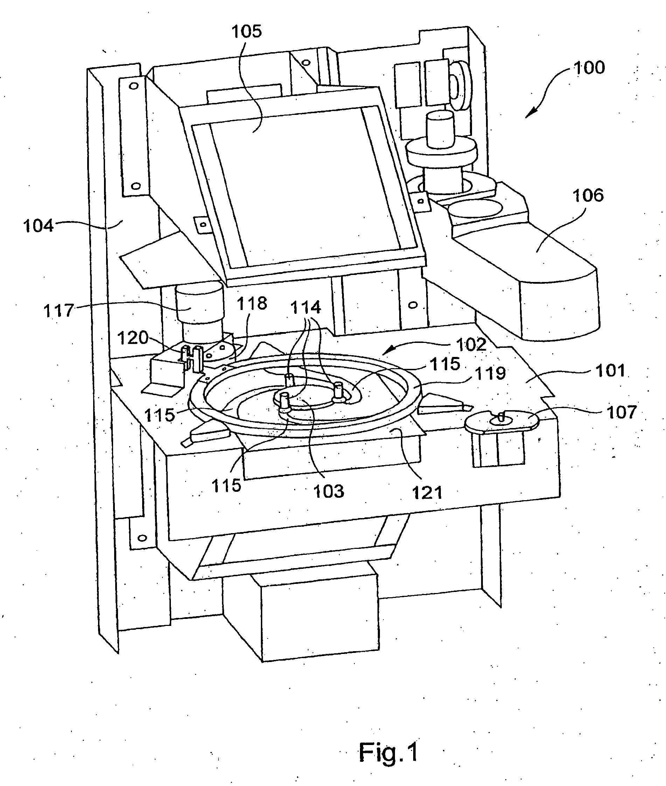

Sur la figure 1 on a représenté schématiquement un mode de réalisation d'un dispositif centreur-bloqueur 100 selon l'invention.

Ce dispositif comporte un pupitre de travail 101 sur lequel est disposé un mécanisme de centrage 102 d'une lentille ophtalmique 103. Il peut s'agir d'une lentille unifocale, bifocale, trifocale ou encore d'une lentille ophtalmique à addition progressive de puissance.

Le dispositif centreur-bloqueur 100 comporte en outre un écran de visualisation 105 fixé sur le bâti 104 de manière à être orienté pour être visible de l'utilisateur travaillant au pupitre de travail 101.

Le mécanisme de centrage 102 du pupitre de travail 101 comporte ici un jeu de trois mors 114 à serrage concentrique portés chacun par un bras 115 pivotant autour d'un axe (non visible sur la figure 1) fixe par rapport au pupitre de travail 101. Les bras sont agencés de manière que leur rotation conjointe autour de leur axe respectif permet le rapprochement des trois mors 114.

Le serrage des mors 114 est commandé par un moteur 117 dont l'axe est solidaire d'un pignon 118 engrenant sur une couronne 119 adaptée à entraîner les bras 115 en rotation autour de leur axe. Les bras 115 comportent en effet chacun une portion dentée semi-circulaire (non représentée) engrenant avec la périphérie externe de la couronne 119. La rotation du pignon 118, sous l'action du moteur 117, entraîne ainsi en rotation la couronne 119 pour provoquer le serrage ou le desserrage des mors 114, en fonction du sens dans lequel est entraînée la couronne 119. Une cellule 120, optique ou électromagnétique, permet au moteur 117 de connaître la position de la couronne 119.

L'ensemble formé par les bras 115 portant les mors 114, et par la couronne 119 est disposé au-dessus d'une plaque support transparente 121.

Par ailleurs, comme le montre la figure 1, le dispositif centreur-bloqueur comporte un bras de positionnement 106, préférentiellement automatisé, relié au bâti 104, et adapté à prendre à l'aide d'une pince un pion de préhension disposé sur un réceptacle 107 et à venir le déposer à un emplacement déterminé par calcul sur la face avant de ladite lentille ophtalmique 103.

Dans cette optique, le dispositif centreur-bloqueur 100 est adapté à détecter et afficher la configuration précise d'un repère de centrage et/ou d'axage de la lentille ophtalmique 103. Plus généralement, le dispositif est capable de détecter et afficher la configuration précise de toute marque de la lentille 103, telle que les cercles de référence pour la vision de près et pour la vision de loin. Classiquement, les marques de la lentille affecte sa face avant convexe qui, en service, est opposée à la plaque support 121.

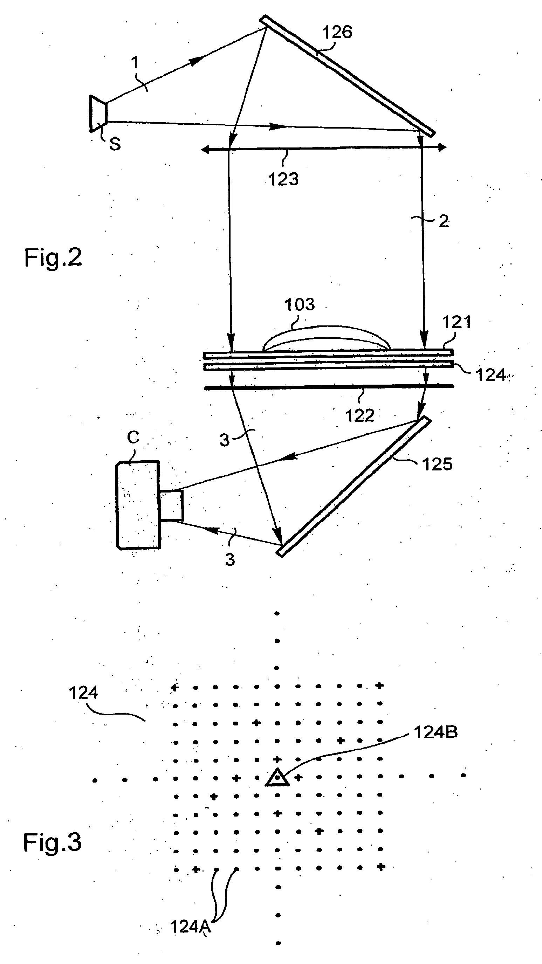

Pour cela, comme le montre schématiquement la figure 2, il comprend avantageusement :

- un moyen d'accueil de la lentille ophtalmique 103,
- de part et d'autre dudit moyen d'accueil, d'une part des moyens d'éclairement de la lentille ophtalmique 103 installée sur ledit moyen d'accueil et, d'autre part, des moyens d'acquisition de l'ombre ou, ce qui revient au même en négatif, de la lumière transmise par ladite lentille ophtalmique 103,
- des moyens de mesure S, 122, 124, C aptes à mesurer le pouvoir de déviation optique qu'exerce la lentille ophtalmique 103 sur au moins un rayons lumineux et à délivrer un signal représentatif de ce pouvoir de déviation,
- un système électronique et informatique (non visible aux figures), tel qu'un microordinateur ou un circuit intégré dédié (ASIC), comprenant des instructions de calcul de correction géométrique déduisant dudit pouvoir de déviation mesuré une géométrie corrigée d'une partie au moins de l'ombre de la lentille ophtalmique 103 perçue par les moyens d'acquisition 122, 125, C.

Le moyen d'accueil est constitué ici par la plaque support 121 transparente à la lumière.

Selon l'exemple représenté, les moyens d'éclairement comprennent une source de lumière S qui émet un faisceau lumineux divergent 1 en direction d'un système de renvoi comportant un miroir 126 incliné à 45° et une lentille convergente 123 adaptée à former un flux lumineux 2 à rayons parallèles en direction de la lentille ophtalmique 103 déposée sur la plaque support 121 avec sa face avant, pourvue du ou des repères de centrage et/ou d'axage, tournée vers ladite lentille convergente 123.

Les moyens d'acquisition comprennent ici une plaque dépolie 122 formant écran de projection et une caméra numérique C captant l'image de cet écran du coté opposé à la lentille 103. La caméra C délivre au système électronique et informatique un signal représentatif de l'image projetée sur l'écran de projection 122. Le système électronique et informatique intègre des moyens de traitement d'image (sous la forme d'un programme d'ordinateur ou d'un ASIC) adaptés à traiter le signal obtenu en sortie de la caméra numérique C. L'image traitée et corrigée au moyen du calcul de correction géométrique est transmise à des moyens d'affichage constitués en l'espèce par l'écran de visualisation 105. Lesdits moyens d'acquisition et d'analyse comprennent entre le support de signe transparent 124 et la caméra numérique C un système optique de renvoi du faisceau lumineux transmis par la lentille ophtalmique 103 comportant un miroir 125 incliné à 45°. La caméra numérique C recueille, via le renvoi angulaire optique opéré par le miroir incliné 125, les images ou ombres projetées sur l'écran de projection dépoli 122.

Avantageusement, dans le dispositif centreur-bloqueur 100, ledit moyen d'accueil, lesdits moyens d'éclairement, lesdits moyens d'acquisition et d'analyse et ledit support de signe transparent sont fixes les uns par rapport aux autres.

En outre, comme le montre la figure 2, il comporte un trajet optique unique entre lesdits moyens d'éclairement et lesdits moyens d'acquisition et d'analyse, ce qui présente l'avantage de réduire l'encombrement et les coûts de fabrication du dispositif et surtout de permettre d'obtenir une précision pérenne de mesure.

Dans un mode de réalisation privilégié, les moyens de mesure les moyens de mesure S, 124, C sont aptes à mesurer le pouvoir de déviation qu'exerce la lentille ophtalmique sur au moins trois rayons lumineux traversant la lentille en trois points non-alignés. Pour augmenter la précision et permettre en particulier la réalisation avec le dispositif, sans moyens supplémentaires, de mesures dé puissances précises, les moyens de mesure de déviation sont du type procédant par déflectométrie.

En l'espèce, ces moyens de mesure comprennent les moyens d'éclairement S et les moyens d'acquisitions, avec l'écran de projection 122 et un système d'acquisition d'image C, 125, servant conjointement à l'acquisition de l'ombre de la lentille 103. A ces moyens d'acquisition d'image, sont associés des moyens pour réaliser en aval de la lentille une séparation du faisceau lumineux émis par la source S en un ou plusieurs rayons lumineux. Cette séparation de faisceau est réalisée par un seul séparateur de faisceau 124 en forme de plaque disposé entre le moyen d'accueil de lentille 121, 114 et l'écran de protection 122 des moyens d'acquisition. On pourrait envisager d'utiliser plusieurs plaques de séparation. Il s'agit en l'espèce d'un support transparent 124 pour un signe opaque 124A, 124B, activable et désactivable, disposé entre la plaque support 121 et l'écran de projection 122 des moyens d'acquisition et d'analyse.

Selon une caractéristique avantageuse, le support de signe transparent 124 est activable et désactivable.

En pratique ce support de signe peut être réalisé sous la forme d'un écran transparent à cristaux liquides (LCD) ou analogue, comme dans l'exemple illustré. Il peut également être constitué d'un support passif permanent (tel qu'un masque, grille, insigne ou figurine, etc.) monté mobile par rapport à la lentille ophtalmique, de façon à être apte à s'effacer pour libérer une partie au moins de l'ombre de la lentille ophtalmique lorsque cette partie doit être examinée sans le signe, comme expliqué plus loin.

Dans ces conditions le terme "activable" et "désactivable" signifient que le support eh cause opère ou non sa fonction de séparation du faisceau lumineux en aval de la lentille sur tout ou partie de la surface de la lentille ophtalmique. On comprend que, concrètement, l'activation ou la désactivation du support peut revêtir une réalité différente selon le type de support utilisé. Lorsque le support est de type passif et consisté par exemple en un support d'un ou plusieurs motifs matérialisés sur ce support, tel qu'une grille ou une plaque ajourée, le terme désactivable signifie escamotable ou rétractable mécaniquement, en totalité ou en partie, le support étant alors monté mobile par rapport à la lentille (qu'il soit lui même mobile ou que la lentille soit mobile et que le support soit fixe) pour permettre un dégagement d'une partie au moins de la surface correspondante de l'ombre de la lentille en vue de sa lecture directe, avec le faisceau lumineux complet, sans séparation de ce faisceau. Lorsque le support est de type actif et consiste par exemple en un écran à affichage dynamique tel qu'un écran CRT ou LCD, le terme désactivable signifie que l'électronique de commande de l'écran éteint tout motif de séparation sur au moins une zone de cet écran correspondant à la zone à lire sans séparation de faisceau de la lentille.

En l'espèce, le support de signe est un écran transparent actif qui est apte à afficher, lorsqu'il est convenablement activé par une unité électronique de pilotage associée, ledit signe opaque. Il s'agit, par exemple, d'un écran à cristaux liquides.

Lorsqu'il n'est pas activé le support de signe transparent 124 est équivalent à la plaque support 121 transparente et ne montre aucun signe opaque.

Lorsqu'il est activé le support de signe transparent 124 affiche le ou les signes opaques utitisés pour détecter la position des repères de centrage et/ou d'axage de la lentille ophtalmique 103.

Comme le montre plus particulièrement la figure 3, ledit support de signe transparent 124 comprend une trame de motifs 124A opaques répétés et réguliers. En particulier, il comprend une matrice d'Hartmann.

En outre, comme le montre également la figure 3, ledit support de signe transparent 124 comporte, préférentiellement en son centre, une figure géométrique 124B dont la dimension maximale hors tout est comprise entre 2 et 10 mm. Cette figure géométrique 124B couvre une superficie comprise entre 3 et 80 mm$^2$. Elle est filaire, distincte d'un point ou d'une croix, de manière à la distinguer d'un repère marqué d'une lentille ophtalmique. Ici la figure géométrique 124B est un polygone, préférentiellement un triangle, mais selon des variantes non représentées, cette figure géométrique peut être un cercle ou un ovale.

Quoi qu'il en soit, on observe que cette figure ou trame réalise une séparation de faisceau lumineux en une pluralité de rayons lumineux traversant la lentille en autant de point non alignés discrètement ou continûment répartis sur la lentille.

En variante, on pourra mettre en oeuvre des moyens de mesure procédant par d'interférométrie.

Avantageusement, le dispositif centreur-bloqueur 100 décrit ci-dessus permet la mise en oeuvre d'une méthode de détection automatique de la position d'une marque présente sur l'une des faces de la lentille, typiquement la face avant convexe. Dans l'exemple décrit, il s'agit, pour fixer les idées, de détecter la position d'un repère de centrage et/ou d'axage de la lentille ophtalmique 103 dans le cercle correspondant de la monture dans laquelle elle doit être montée. Cette méthode comporte les étapes suivantes.

Etape a

À titre de calibrage on acquiert et on mémorise l'ombre du signe opaque 124B ménagé sur le support de signe transparent 124 activé et éclairé seul par les moyens d'éclairement S.

Etape b

On superpose la lentille ophtalmique 103 et le support de signe transparent 124 activé.

Étape c

On a inséré par activation du support 124 entre la lentille et le dépoli un motif opaque de géométrie connue. On acquiert alors et on mémorise dans une mémoire vive (RAM) des moyens de traitement l'ombre du signe dudit support éclairé par les moyens d'éclairement S.

Étape d

On acquiert et on mémorise dans la mémoire vive (RAM) des moyens de traitement l'ombre du repère de centrage et/ou d'axage de la lentille ophtalmique 103 lorsqu'elle est éclairée par les moyens d'éclairement S, le support transparent étant désactivé et ne présentant donc aucun signe opaque.

Étape e

On déduit de la déviation prismatique de la figure géométrique 124B mesurée par comparaison des acquisitions réalisées aux étapes a) et c), la position corrigée non déviée de l'ombre de la marque ou repère sur la face avant de ladite lentille ophtalmique.
A cet effet, on détermine la déformation de ce motif lorsque la lentille est présente.
La déformation de ce motif par effet prismatique de la lentille nous permet alors de déduire la déformation de l'ombre de la lentille à l'endroit du motif.
Par exemple, si la distance entre l'écran de projection et le motif vaut d1, que la distance entre la lentille et l'écran dé projection est constante ou approximativement connue et vaut d2, que la déformation du motif vaut def1, alors la déformation de l'image de la lentille vaut en cet endroit :

$$def2 \approx def1^{*}d2/d1.$$

On calcule ensuite la position ou géométrie corrigée de la marque ou repère qui correspond, selon l'invention, sensiblement à la position que présenterait l'ombre du repère de la lentille si cette lentille ne possédait aucun pouvoir de déviation.
Ce calcul peut se réaliser de plusieurs manières

1$^{ère}$ méthode: méthode locale

A partir de la mesure locale de la déformation de la figure géométrique, la réformation globale de la lentille est modélisée avec un modèle mathématique, dont les paramètres peuvent être déterminés avec cette mesure locale. On calcule donc les paramètres avec la mesure locale puis on applique ces paramètres sur le modèle global.
Par exemple, on peut considérer que les déformations globale de la lentille se modélisent simplement par les paramètres suivants :

$$DX=aX+bY+c \quad et \quad DY=dX+eY+f$$

avec X,Y les coordonnées d'un point du verre,
DX=déformation suivant l'axe X, DY=déformation suivant l'axe Y

Les paramètres à déterminer sont a,b,c,d,e et f.

Ceux-ci peuvent être calculés par exemple avec une mesure de déformation locale d'un motif constitué d'au moins 3 points A1,A2,A3.

Il nous alors résoudre le système de 6 équations à 6 inconnues (a,b,c,d,e,f) :

$$DX(A1)=aX\ A1+bY\ A1+c$$

$$DY(A1)=dX\ A1+eY\ A1+f$$

$$DX(A1)=aX\ A2+bY\ A2+c$$

$$DY(A1)=dX\ A2+eY\ A2+f$$

$$DX(A1)=aX\ A3+bY\ A3+c$$

$$DY(A1)=dX\ A3+eY\ A3+f$$

Il est possible bien sûr de prendre plus de 3 points (N points) et de résoudre le système de 2N équations à 6 inconnues par une méthode par exemple des moindres carrés, ce qui permet d'obtenir une meilleure précision sur la détermination de a,b,c,d,e,f.

2$^{éme}$ méthode : méthode globale

On mesure la déformation de l'ombre sur l'ensemble de la lentille.

On peut par exemple envisager un motif constitué de nombreux points répartis sur l'ensemble de la lentille. On peut alors calculer, par exemple, pour chacun de ces points la déformation de l'ombre et réaliser une interpolation linéaire de la déformation entre deux de ces points.

Etape f : Affichage de l'image corrigée complète de la lentille

Pour afficher l'image (ou ombre) de la lentille corrigée de la déformation, pour chaque pixel de l'image corrigée on calcule le pixel correspondant de l'image non corrigée, en utilisant l'estimation de déformation de la lentille réalisée précédemment au point correspondant et on affecte la valeur du pixel non corrigé au pixel de l'image corrigée.

On a en effet pour chaque pixel(i,j) de l'image (corrigée) un point de la lentille correspondant le point Aij.

Ce point Aij est décalé de def2ij, def2ij étant estimé à partir d'une des 2 méthodes (locale/globale). Le point décalé correspond à Bi'j' sur l'image non corrigé.

On affecte alors au point Aij l'intensité de l'image non corrigé au point Bi'j'.

En revanche, l'ombre du contour de la lentille est affichée telle quelle, sans correction.

Pour cela, si l'ensemble de l'ombre de la lentille est corrigée, on opère une reconnaissance logicielle du contour de la lentille afin de l'exclure de la correction à l'affichage : les pixels correspondants ne sont pas réaffectés.

Si la correction d'image n'affecte qu'une partie de la lentille située à l'intérieur de son contour, il n'est alors pas nécessaire d'effectuer cette reconnaissance. L'ombre du contour est affichée directement, avec l'ensemble de la zone située à l'extérieur de la zone corrigée, sans aucune correction d'ensemble.

Le système électronique et informatique exécute cette alternative et pilote l'écran de visualisation 105 pour afficher le contour de la lentille 103 sans lui appliquer le calcul de correction géométrique.

Etape g: Détermination des positions corrigées des marques dans un référentiel du dispositif (mode automatique)

Cette étape n'est pas obligatoire. Elle peut être omise dans le cas d'un fonctionnement en mode manuel de l'appareil.

Le système électronique et informatique comporte des instructions de reconnaissance d'image aptes à reconnaître l'ombré d'une marque de la lentille ophtalmique 103 perçue par les moyens d'acquisition 122, 125, C et à lui appliquer ledit calcul de correction géométrique pour en déduire sa position corrigée dans un référentiel connu correspondant sensiblement à la position que présenterait dans ce référentiel l'ombre de cette marque en l'absence de pouvoir de déviation de la lentille 103.

En particulier, les instructions de reconnaissance d'image sont aptes à reconnaître l'ombre d'une ou plusieurs marque de centrage et/ou d'axage, telle que la croix de centrage et le traits d'axage, de la lentille ophtalmique perçue par les moyens d'acquisition 122, 125, C.

De plus, dans le cas du traitement d'une lentille multifocale, les instructions de reconnaissance d'image sont aptes à reconnaître l'ombre d'une marque de référence pour la vision de loin ou la vision de près de la lentille ophtalmique perçue par les moyens d'acquisition 122, 125, C.

Pour déterminer les corrections géométriques à appliquer aux marques de la lentilles, on peut procéder par exemple de la manière suivante. A partir de l'image (ombre) corrigée globale de la lentille, on réalise une reconnaissance automatique des marques de la lentille. On reconnaît ainsi par traitement d'images les points fronto, les marquages des verres progressifs (croix de centrage, cercle de vision de près/loin, axe), les pastilles et les microgravures.

Ces paramètres optiques reconnus automatiquement sont corrects (corrigés) puisqu'extraits d'une image de lentille globalement corrigée.

Etape h : Centrage

Cette méthode de détection corrigée de la position du repère de centrage et/ou d'axage de la lentille ophtalmique va permettre de centrer la lentille ophtalmique 103 selon un viseur de centrage donné pour déposer à un endroit déterminé sur la face avant de la lentille 103 le pion de préhension qui va permettre de bloquer et d'entraîner ultérieurement en rotation la lentille 103 dans une meuleuse pour la conformer au cercle de la monture choisie.

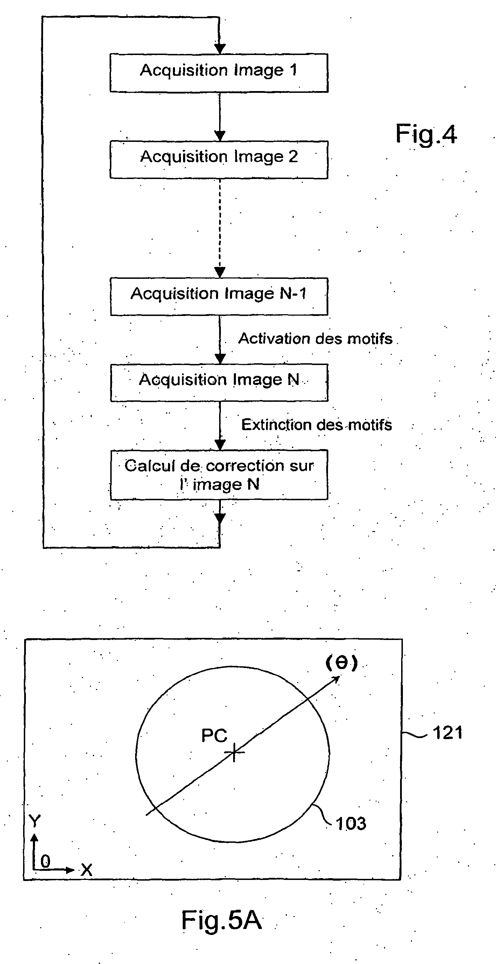

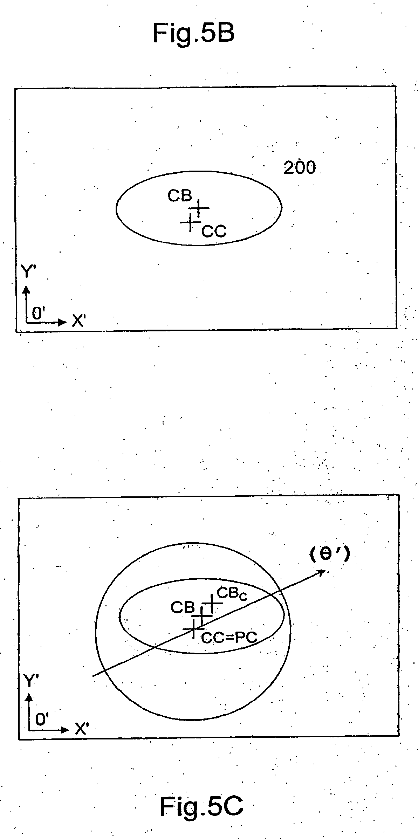

Pour centrer automatiquement ou manuellement ladite lentille ophtalmique 103, préliminairement aux étapes a) à d) énoncées ci-dessus, l'opérateur indique au dispositif centreur-bloqueur, via un clavier de commande, le type de lentille ophtalmique à centrer, la position du point de centrage PC de la lentille 103 (voir figure 5A à 5C) par rapport au centre boxing CB qui est le centre de la monture choisie (voir définition ci-déssous en relation avec les figures 5B et 5C) ainsi qu'éventuellement pour les lentilles ophtalmiques unifocales cylindriques l'orientation souhaitée de son axe.

En effet, les paramètres précités respectent une convention dé centrage qui inclut d'une part un référentiel de mesure (O, X, Y) lié à la caméra et représenté sur la figure 5A et d'autre part un référentiel d'affichage (O', X', Y') lié à la monture et représenté sur la figure 5B.

Dans le référentiel dé mesure (O, X, Y) on acquiert le point de centrage PC de la lentille ophtalmique repéré par les coordonnées $X_{PC}$, $Y_{PC}$.

Concrètement, la nature du point de centrage dépend du type de la lentille considérée.

Dans le cas d'une lentille unifocale, le point de centrage PC est le centre optique préalablement marqué.

Dans le cas d'une lentille bifocale, le point de centrage PC est le centre du segment de la pastille.

Dans le cas d'une lentille à addition progressive de puissance, le point de centrage PC est la croix de centrage.

D'autre part comme le montre la figure 5A, l'orientation de la lentille ophtalmique est repérée par un angle θ qui est l'angle entre un axe particulier de la lentille et l'axe X du référentiel de mesure.

Cet axe particulier est selon le cas :

- l'axe du cylindre pour une lentille unifocale torique,
- l'axe des marquages horizontaux pour une lentille progressive, et
- l'axe du segment de la pastille pour une lentille bifocale.

Le référentiel d'affichage concerne la monture choisie. Cette monture possède deux cercles (de forme quelconque non nécessairement circulaire) accueillant chacun une lentille. En l'espèce, le cercle concerné présente une forme courbe dans le référentiel X, Y. Un centre est défini pour le cercle de monture. Conventionnellement, on pourra par exemple définir comme centre du cercle de monture, le centre du rectangle dans lequel est inscrit le cercle de monture. Ce centre appelé « centre boxing » est noté CB et est repéré par ses coordonnées $X'_{CB}$, $Y'_{CB}$ dans le repère (O', X', Y').

Le pion de préhension est fixé généralement sur la lentille au centre boxing CB.

L'écart souhaité en X et en Y entre le point de centrage PC et le centre CB est saisi par l'opérateur dans le dispositif centreur-bloqueur 100. Il dépend de la prescription, de la morphologie du porteur et de la forme de la monture.

Cet écart présente les coordonnées suivantes dans le référentiel (O', X', Y') : $\delta X' = X'_{PC} - X'_{CB}$, $\delta Y' = Y'_{PC} - Y'_{CB}$ (voir figure 5C).

Sur la figure 5C, on a noté $\theta'$ l'angle souhaité pour l'axe de la lentille ophtalmique dans le référentiel d'affichage (O', X', Y') et donc dans le référentiel de la monture (voir figure 5C).

Après avoir entré les paramètres de centrage précités dans le dispositif centreur-bloqueur, l'opérateur dépose la lentille sur son support et l'opération de centrage peut débuter.

On prévoit deux mode de fonctionnement : un mode automatique et un mode semi-automatique ou manuel assisté.

En mode automatique, tout d'abord, l'opérateur dépose dans une position quelconque la lentille ophtalmique 103 sur la planque support 121 transparente (voir figure 1) avec sa face avant tournée vers lesdits moyens d'éclairement. Lorsque l'entrée des paramètres est validée, les mors 114 serrent la lentille ophtalmique 103 et l'opération de centrage débute.

Les étapes a) à d) de la méthode de détection sont alors effectuées sur la lentille ophtalmique 103.

Puis après l'étape d), lorsqu'il s'agit d'une lentille ophtalmique unifocale, on effectue une rotation, une translation de l'image obtenue à l'étape c) de façon à placer le point de centrage et l'axe de la lentille ophtalmique dans la position souhaitée dans le référentiel d'affichage avant d'afficher l'image ainsi calculée avec en incrustation le contour de la lentille ophtalmique et la forme de la monture (voir figure 5C).

Lorsqu'il s'agit d'une lentille ophtalmique à addition progressive de puissance ou d'une lentille ophtalmique bifocale, après l'étape d) de calcul de la position corrigée non déviée dudit repère de centrage sur la face avant de ladite lentille ophtalmique, on effectue une rotation, une translation de l'image obtenue à l'étape c) de façon à placer le point de centrage et l'axe de la lentille ophtalmique dans la position souhaitée dans le préférentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée sur l'affichage en déplaçant l'image de la forme de la monture.

Lorsque le dispositif centreur-bloqueur 100 fonctionne en mode manuel, les mors 114 sont resserrés à vide afin de former un trépied sur lequel est positionnée la lentille ophtalmique 103 à centrer. L'image de la lentille ophtalmique 103 observée par la caméra numérique C est affichée en temps réel sur l'écran de visualisation 105 du dispositif centreur-bloqueur 100.

Lorsqu'il s'agit d'une lentille ophtalmique unifocale, son centre optique et éventuellement son axe sont préalablement marqués à l'aide d'un frontofocomètre.

Puis, à l'aide du dispositif centreur-bloqueur 100 on réalise les étapes suivantes.

Etape a)

À titre de calibrage, on acquiert et mémorise l'ombre de la figure géométrique 124B prédéfinie ménagée sur le support de signe transparent 124 éclairé seul par les moyens d'éclairement, la figure géométrique, ici un triangle, présentant une dimension maximale hors tout comprise entre 2 et 10 mm.

Etape b)

On superpose la lentille ophtalmique 103 et le support de signe transparent 124.

Étape c)

On acquiert et on mémorise l'ombre de ladite figure géométrique 124B dudit support 124 déviée par ladite lentille ophtalmique 103 lorsque celle-ci et ledit support 124 sont éclairés par les moyens d'éclairement S.

Étape d)

À l'aide des moyens d'acquisition, c'est-à-dire de la caméra C, on acquiert, sans la mémoriser, l'ombre du repère de centrage et/ou d'axage PC de la lentille ophtalmique 103 lorsqu'elle est éclairée par les moyens d'éclairement S.

On acquiert simultanément l'ombre du contour de la lentille ophtalmique à centrer 103.

Étape e)

On affiche sur l'écran de visualisation 105, d'une part l'ombre du repère de centrage et/ou d'axage PC de la lentille ophtalmique 103 et d'autre part une cible virtuelle de centrage CC correspondant à la position voulue du repère de centrage PC de la lentille 103 par rapport à un point de référence CB du cercle 200 de la monture.

On affiche simultanément sur l'écran de visualisation 105 d'une part cette ombre du contour de la lentille 103 et d'autre part une image virtuelle 200 représentative du cercle concerné de la monture. Cette image virtuelle du cercle de monture 200 est, par calcul, décalée latéralement, et/ou angulairement indépendamment du point de référence CB dudit cercle de monture, par rapport à la cible virtuelle de centrage CC associée au cercle de monture 200, pour compenser les déviations prismatiques induites par la lentille à centrer 103.

Etape f)

On déduit de la déviation prismatique de la figure géométrique 124B mesurée par comparaison des acquisitions réalisées aux étapes a) et c), une position relative corrigée CBc du point de référence CB du cercle de monture 200 par rapport au repère de centrage PC de la lentille ophtalmique 103, ou inversement.

Étape g)

On déplace manuellement la lentille pour, mettre en coïncidence manuellement l'ombre du repère de centrage PC de la lentille 103 et la cible virtuelle de centrage CC.

L'ordre des étapes a) à g) n'est pas nécessairement celui dans lequel ces étapes apparaissent ci-dessus, mais peut au contraire varier en fonction du mode opératoire retenu.

Dans un mode d'exécution particulièrement avantageux, les étapes c) à f) sont réalisées en boucle, à la suite des étapes a) et b), de façon à obtenir en continu une position relative corrigée (CBc) du point de référence (CB) du cercle de monture (200).

L'opérateur déplace manuellement la lentille pour effectuer une rotation et/ou une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée en temps réel sur l'affichage en déplaçant en conséquence l'image de la forme du cercle 200 de la monture.

Dans un autre mode d'exécution, plus simple à mettre en oeuvre, les étapes d) et e) sont réalisées en boucle, à la suite des étapes a) et b) et tes étapes c) et f) sont réalisées une seule fois à la suite de l'étape g). La correction de l'erreur de déviation du repère de centrage n'est alors pas répercutée sur l'écran de visualisation, mais est directement prise en compte dans les informations de positionnement transmises au bras de blocage pour le dépôt d'un pion de préhension.

Selon une variante de réalisation de la méthode de centrage manuel précitée, on propose de combiner les avantages de la correction de la déviation prismatique de la position du repère de la lentille et le confort d'affichage pour l'opérateur, en affichant les motifs 124A,124B du support de signe transparent 124 de façon cyclique, en synchronisant l'acquisition de l'image de la lentille 103 lorsque lesdits motifs 124A,124B sont activés et en calculant ta correction de la déviation prismatique induite par la lentille sur cette image capturée conformément au cycle représenté sur la figure 4.

Plus particulièrement, la méthode de centrage manuel de la lentille ophtalmique 103 à l'aide du dispositif centreur-bloqueur comporte les étapes suivantes.

Etape a)

À titre de calibrage, on acquiert et on mémorise l'ombre d'un signe opaque (la figure géométrique 124B par exemple) ménagé sur le support de signe transparent 124 interposé entre les moyens d'éclairement S et les moyens d'acquisition et d'analyse C, lorsque ledit support 124 est éclairé seul par lesdits moyens d'éclairement.

Etape b)

On superpose ladite lentille ophtalmique 103 et le support de signe transparent 124.

Étape c)

On acquiert et on mémorise l'ombre du signe opaque 124A,124B dudit support 124 déviée par ladite lentille ophtalmique 103 lorsque celle-ci et ledit support 124 sont éclairés conjointement par les moyens d'éclairement S.

Étape d)

On acquiert avec les moyens d'acquisition C l'ombre du repère de centrage et/ou d'axage PC de la lentille ophtalmique 103 lorsqu'elle est éclairée par lesdits moyens d'éclairement.

On acquiert simultanément l'ombre du contour de la lentille ophtalmique à centrer 103.

Étape e)

On affiche sur un écran de visualisation 105, d'une part, en direct des moyens d'acquisition et d'analyse, les ombres de la lentille ophtalmique 103, du repère de centrage PC de la lentille 103 et du signe opaque 124B lorsqu'il est activé, et d'autre part, une cible virtuelle de centrage CC correspondant à la position voulue du repère de centrage PC de la lentille à centrer 103 par rapport à un point de référence CB du cercle 200 de monture. Le signe opaque 124B du support de signe transparent 124 est affichée de façon intermittente pendant une durée d'affichage suffisamment courte pour que l'oeil humain ne perçoive pas son ombre sur l'écran de visualisation.

On affiche sur l'écran de visualisation 105 d'une part cette ombre du contour de la lentille 103 et d'autre part une image virtuelle 200 représentative du cercle concerné de la monture. Cette image virtuelle du cercle de monture 200 est décalée indépendamment du point de référence CB dudit cercle de monture, par rapport à la cible virtuelle de centrage CC associée audit cercle de monture, pour compenser les déviations prismatiques induites par la lentille à centrer 103.

Étape f)

On déduit de la déviation prismatique de la figure géométrique 124B mesurée par comparaison des acquisitions réalisées aux étapes a) et c), une position relative corrigée CBc du point de référence CB du cercle de monture 200 par rapport au repère de centrage PC, ou inversement.

Étape g)

On met en coïncidence, en déplaçant manuellement la lentille ophtalmique 103, le repère de centrage PC de la lentille ophtalmique 103 et la cible virtuelle de centrage CC.

Ici encore, l'ordre des étapes a) à g) n'est pas nécessairement celui dans lequel ces étapes apparaissent ci-dessus, mais peut au contraire varier en fonction du mode opératoire retenu. L'opérateur déplace manuellement la lentille pour effectuer une rotation et/ou une translation de l'image obtenue à l'étape c) de façon à placer le point de centrage et l'axe de la lentille ophtalmique dans la position souhaitée dans le référentiel affichage avant d'afficher l'image ainsi calculée avec en incrustation le contour de la lentille ophtalmique et la forme de la monture (voir figure 5C). La correction de la déviation du faisceau lumineux transmis au travers de la lentille est répercutée en temps réel sur l'affichage en déplaçant en conséquence l'image de la forme de la monture.

Dans un mode d'exécution particulièrement avantageux, les étapes c) à f) sont réalisées en boucle, à la suite des étapes a) et b), de façon à obtenir en continu une position relative corrigée CBc du point de référence CB du cercle de monture 200.

Dans un autre mode d'exécution, plus simple à mettre en oeuvre, les étapes d) et e) sont réalisées en boucle, à la suite des étapes a) et b) et les étapes c) et f) sont réalisées une seule fois à la suite de l'étape g). La correction de l'erreur de déviation du repère de centrage n'est alors pas répercutée sur l'écran de visualisation, mais est directement prise en compte dans les informations de positionnement transmises au bras de blocage pour le dépôt d'un pion de préhension.

Ainsi, avantageusement, grâce à cette méthode selon l'invention, on supprime l'affichage sur l'écran de visualisation de l'ombre du signe opaque du support transparent qui sert à déterminer la déviation prismatique de la position du repère de la lentille et à corriger l'erreur de détection en résultant. On évite ainsi de perturber la lecture de l'écran de visualisation de l'opérateur qui ne voit à l'écran que l'image de la lentille et celle du viseur, tout en tenant compte dé la correction de la déviation prismatique déterminée.

Cette méthode de centrage participe au blocage de la lentille ophtalmique 103. C'est ainsi qu'après le centrage de ladite lentille par la méthode précédemment décrite, on procède, au moyen du bras de positionnement automatique 106, au dépôt d'un pion de préhension à un emplacement prédéterminé sur la lentille ophtalmique 103.

L'unité de traitement électronique calcule pour cela l'emplacement corrigé où le loin de préhension est déposé en tenant compte de la position corrigée CBc du point de référence CB du cercle de monture 200 calculée à l'étape f).

La présente invention n'est nullement limitée aux modes de réalisation décrits et représentés mais l'homme du métier saura y apporter toute variante conforme à son esprit.

**Revendications**

1. Dispositif d'acquisition corrigée de l'ombre d'une lentille ophtalmique (103) présentant une ou plusieurs marques (PC), comprenant:

   - un moyen d'accueil (121, 114) de ladite lentille ophtalmique,
   - de part et d'autre dudit moyen d'accueil, d'une part, des moyens d'éclairement (S) de la lentille ophtalmique (103) installée sur ledit moyen d'accueil (121, 114) et, d'autre part, des moyens d'acquisition (122, 125, C) de l'ombre de ladite lentille ophtalmique éclairée par les moyens d'éclairement (S), et
   - des moyens de mesure (S, 124, C) aptes mesurer le pouvoir de déviation optique qu'exerce la lentille ophtalmique installée sur ledit moyen d'accueil (121, 114) sur au moins un rayon lumineux émis par lesdits moyen d'éclairement (S) et à délivrer un signal représentatif de ce pouvoir de déviation,
   - un système électronique et informatique comprenant des instructions de calcul de correction géométrique déduisant dudit pouvoir de déviation mesuré une géométrie corrigée d'une partie au moins de l'ombre de la lentille ophtalmique perçue par les moyens d'acquisition (122, 125, C).

2. Dispositif selon la revendication précédente, dans lequel ladite géométrie corrigée correspond sensiblement à la géométrie que présenterait l'ombre de ladite lentille si cette lentille ne possédait aucun pouvoir de déviation.

3. Dispositif selon l'une des revendications précédentes, dans laquelle les moyens de mesure (S, 124, C) sont aptes à mesurer le pouvoir de déviation qu'exerce la lentille ophtalmique sur au moins trois rayons lumineux traversant la lentille en trois points non-alignés.

4. Dispositif selon l'une des revendications précédentes, dans lequel les moyens de mesure sont du type procédant par déflectométrie.

5. Dispositif selon la revendication précédente, dans lequel les moyens de mesure par déflectométrie comprennent au moins un séparateur de faisceau disposé entre le moyen d'accueil de lentille (121, 114) et les moyens d'acquisition (122, 125, C).

6. Dispositif selon la revendication précédente, dans lequel les moyens de mesure par déflectométrie comprennent lesdits moyens d'acquisitions (122, 125, C).

7. Dispositif selon l'une des revendications précédentes, dans lequel les moyens d'acquisition comprennent un écran de projection (122) et un système d'acquisition d'image (C, 125) agencé pour capter l'image de cet écran de projection.

8. Dispositif selon l'une des revendications précédentes, dans lequel ledit moyen d'accueil, lesdits moyens d'éclairement, lesdits moyens, d'acquisition et lesdits moyens de mesure sont fixes les uns par rapport aux autres.

9. Dispositif selon l'une des revendications précédentes, comportant un trajet optique unique entre lesdits moyens d'éclairement et lesdits moyens d'acquisition.

10. Dispositif selon l'une des revendications 4 à 8, dans lequel ledit séparateur de faisceau est un support (124) pour au moins un signe (124A, 124B) disposé entre ledit moyen d'accueil et lesdits moyens d'acquisition et dans lequel la loi de correction géométrique calculée par ledit système électronique et informatique est fonction de l'ombre déformée du signe (124A, 124B) perçue par les moyens d'acquisition (122, 125, C).

11. Dispositif selon la revendication précédente, dans lequel le support de signe (124) est activable et désactivable.

12. Dispositif selon la revendication précédente, dans lequel ledit support de signe est un écran actif transparent apte à afficher sélectivement ledit signe opaque.

13. Dispositif selon la revendication précédente, dans lequel ledit écran transparent est un écran à cristaux liquides.

14. Dispositif selon la revendication 9, dans lequel ledit support de signe comprend une trame de motifs répétés et réguliers.

**15.** Dispositif selon la revendications précédente, dans lequel ledit support de signe comprend une matrice de Hartmann.

**16.** Dispositif selon l'une des revendications 9 à 14, dans lequel ledit support de signe comporte une figure géométrique dont la dimension maximale hors tout est comprise entre 2 et 10 mm.

**17.** Dispositif selon la revendication précédente, dans lequel que la figure géométrique couvre une superficie comprise entre 3 et 80 mm$^2$.

**18.** Dispositif selon l'une des deux revendications précédentes, dans lequel la figure géométrique est de forme distincte d'un point ou d'une croix, apte à être visuellement distinguée d'un repère marqué d'une lentille ophtalmique.

**19.** Dispositif selon l'une des revendications 14 à 17, dans lequel la figure géométrique est un polygone, préférentiellement un triangle.

**20.** Dispositif selon l'une des revendications 14 à 17, dans lequel la figure géométrique est un cercle ou un ovale.

**21.** Dispositif selon l'une des revendications 1 à 3, dans lequel les moyens de mesure sont du type procédant par d'interférométrie.

**22.** Dispositif selon l'une des revendications précédentes, comprenant des moyens pour poser un pion de préhension à un emplacement déterminé par calcul sur la face avant de ladite lentille ophtalmique.

**23.** Dispositif selon la revendication précédente, dans lequel lesdits moyens de pose du pion de préhension sont des moyens automatiques.

**24.** Dispositif selon la revendication 21, dans lequel lesdits moyens de pose du pion de préhension sont des moyens de manipulation à commande manuelle.

**25.** Dispositif selon l'une des revendications précédentes, comportant des moyens d'affichage pilotés par le système électronique et informatique pour afficher la géométrie au moins partiellement corrigée de l'ombre perçue par les moyens d'acquisition (122, 125, C).

**26.** Dispositif selon la revendication précédente, dans laquelle le système électronique et informatique pilote les moyens d'affichage pour afficher le contour de la lentille sans lui appliquer le calcul de correction géométrique.

**27.** Dispositif selon, l'une des revendications précédentes, dans lequel le système électronique et informatique comporte des instructions de reconnaissance d'image aptes à reconnaître l'ombre d'une marque de la lentille ophtalmique perçue par les moyens d'acquisition (122, 125, C) et à lui appliquer ledit calcul de correction géométrique pour en déduire sa position corrigée dans un référentiel connu correspondant sensiblement à la position que présenterait dans ce référentiel l'ombre de cette marque en l'absence de pouvoir de déviation de la lentille.

**28.** Dispositif selon la revendication précédente, dans lequel les instructions de reconnaissance d'image sont aptes à reconnaître l'ombre d'une marque de centrage et/ou d'axage de la lentille ophtalmique perçue par les moyens d'acquisition (122, 125, C).

**29.** Dispositif selon l'une des deux revendications précédentes, dans lequel les instructions de reconnaissance d'image sont aptes à reconnaître l'ombre d'une marque de référence pour la vision de loin ou la vision de près de la lentille ophtalmique perçue par les moyens d'acquisition (122, 125, C).

**30.** Méthode d'acquisition corrigée de l'ombre d'une lentille ophtalmique (103) présentant une ou plusieurs marques (PC), comportant les étapes suivantes :

- éclairer la lentille par un faisceau lumineux,
- mesurer le pouvoir de déviation optique qu'exerce la lentille ophtalmique sur au moins un rayon lumineux incident dudit faisceau,
- déduire du pouvoir de déviation mesuré, par calcul, une géométrie corrigée d'une partie au moins de l'ombre de ladite lentille ophtalmique éclairée par ledit faisceau lumineux.

**31.** Méthode selon la revendication précédente, dans laquelle ladite géométrie corrigée correspond sensiblement à la géométrie que présenterait l'ombre de ladite lentille si cette lentille ne possédait aucun pouvoir de déviation.

**32.** Méthode selon l'une des deux revendications précédentes, dans laquelle on mesure le pouvoir de déviation qu'exerce la lentille ophtalmique sur au moins trois rayons lumineux distincts, traversant la lentille en trois points non alignés.

**33.** Méthode selon l'une des trois revendications précédentes, dans laquelle, pour mesurer le pouvoir de déviation de la lentille ophtalmique, on utilise des moyens de déflectométrie.

**34.** Méthode selon la revendication précédente, dans laquelle, pour mesurer le pouvoir de déviation de la lentille ophtalmique, on éclaire la lentille ophtalmique et on recueille l'ombre de la lentille sur des moyens d'acquisition (122, 125, C), un séparateur de faisceau étant disposé entre lesdits moyens d'acquisition et la lentille.

**35.** Méthode selon l'une des revendications 30 à 32, dans laquelle, pour mesurer le pouvoir de déviation de la lentille ophtalmique, on utilise des moyens d'interférométrie.

**36.** Méthode selon l'une des revendications 30 à 35, dans laquelle, la lentille ophtalmique étant du type multifocale, la correction géométrique est appliquée à au moins une marque de référence pour la vision de près ou de loin de la lentille ophtalmique multifocale pour obtenir une position corrigée de cette marque.

**37.** Méthode selon l'une des revendications 30 à 36, dans laquelle la correction géométrique est appliquée à l'ombre d'au moins une marque de centrage et/ou d'axage de la lentille ophtalmique pour obtenir une position corrigée de cette ombre.

**38.** Méthode selon la revendication précédente, dans laquelle, on affiche sur un écran de visualisation (105) une image virtuelle (200) représentative du contour souhaité après détourage de la lentille, et on repère la position de cette image de contour par rapport à la position corrigée de l'ombre de la marque de centrage de la lentille.

**39.** Méthode selon l'une des revendications 30 à 38, comportant une étape d'affichage de la géométrie corrigée de l'ombre de la lentille sur un écran de visualisation (105).

**40.** Méthode selon la revendication précédente, dans laquelle, lors de ladite étape d'affichage, l'ombre du contour de la lentille est affichée sur un écran de visualisation (105) sans lui appliquer le calcul de correction géométrique.

**41.** Méthode selon l'une des revendications 30 à 40, comportant une étape de reconnaissance de l'ombre d'une marque de la lentille ophtalmique et une étape d'application, à cette ombre de marque, du calcul de correction géométrique pour en déduire sa position corrigée dans un référentiel connu, cette position corrigée correspondant sensiblement à la position que présenterait dans ce référentiel l'ombre de cette marque en l'absence de pouvoir de déviation de la lentille.

**42.** Méthode selon la revendications précédente, appliquée au centrage automatique de la lentille, dans laquelle l'ombre reconnue est celle d'une marque de centrage et/ou d'axage de la lentille ophtalmique.

**Patentansprüche**

**1.** Vorrichtung zum korrigierten Erfassen des Schattens einer ophthalmischen Linse (103), die eine oder mehrere Markierungen (PC) aufweist, die Folgendes umfasst:

- ein Aufnahmemittel (121, 114) für die ophthalmische Linse,
- beiderseits des Aufnahmemittels einerseits Mittel (S) zum Beleuchten der ophthalmischen Linse (103), die an dem Aufnahmemittel (121, 114) installiert sind, und andererseits Mittel (122, 125, C) zum Erfassen des Schattens der ophthalmischen Linse, die durch die Beleuchtungsmittel (S) beleuchtet wird, und
- Messmittel (S, 124, C), die die optische Ablenkleistung messen können, die die an dem Aufnahmemittel (121, 114) installierte ophthalmische Linse auf wenigstens einen von den Beleuchtungsmitteln (S) ausgesendeten Lichtstrahl anwenden können, und ein diese Ablenkleistung repräsentierendes Signal ausgeben können,
- ein elektronisches und datenverarbeitendes System, das Rechenbefehle für die geometrische Korrektur enthält und aus der gemessenen Ablenkleistung eine korrigierte Geometrie wenigstens eines Teils des Schattens der ophthalmischen Linse, der von den Erfassungsmitteln (122, 125, C) wahrgenommen wird, ableitet.

2. Vorrichtung nach dem vorhergehenden Anspruch, wobei die korrigierte Geometrie im Wesentlichen der Geometrie entspricht, die der Schatten der Linse aufweisen würde, wenn diese Linse keine Ablenkleistung besäße.

3. Vorrichtung nach einem der vorhergehenden Ansprüche, wobei die Messmittel (S, 124, C) die Ablenkleistung, die die ophthalmische Linse auf wenigstens drei Lichtstrahlen anwendet, die an drei nicht aufeinander ausgerichteten Punkten durch die Linse laufen.

4. Vorrichtung nach einem der vorhergehenden Ansprüche, wobei die Messmittel von dem Typ sind, der mit Deflektometrie arbeitet.

5. Vorrichtung nach dem vorhergehenden Anspruch, wobei die Mittel zum Messen durch Deflektometrie wenigstens einen Strahlentrenner umfassen, der zwischen dem Linsenaufnahmemittel (121, 114) und den Erfassungsmitteln (122, 125, C) angeordnet ist.

6. Vorrichtung nach dem vorhergehenden Anspruch, wobei die Mittel zum Messen durch Deflektometrie die Erfassungsmittel (122, 125, C) umfassen.

7. Vorrichtung nach einem der vorhergehenden Ansprüche, wobei die Erfassungsmittel einen Projektionsschirm (122) und ein Bilderfassungssystem (C, 125), das dafür ausgelegt ist, das Bild dieses Projektionsschirms aufzunehmen, umfassen.

8. Vorrichtung nach einem der vorhergehenden Ansprüche, wobei das Aufnahmemittel, die Beleuchtungsmittel, die Erfassungsmittel und die Messmittel relativ zueinander fest sind.

9. Vorrichtung nach einem der vorhergehenden Ansprüche, die einen einzigen optischen Weg zwischen den Beleuchtungsmitteln und den Erfassungsmitteln aufweist.

10. Vorrichtung nach einem der Ansprüche 4 bis 8, wobei der Strahlentrenner ein Träger (124) für wenigstens ein Zeichen (124A, 124B) ist, das zwischen dem Aufnahmemittel und den Erfassungsmitteln angeordnet ist, und wobei das Gesetz der geometrischen Korrektur, das durch das elektronische und datenverarbeitende System berechnet wird, eine Funktion des verformten Schattens des Zeichens (124A, 124B) ist, der von den Erfassungsmitteln (122, 125, C) wahrgenommen wird.

11. Vorrichtung nach dem vorhergehenden Anspruch, wobei der Zeichenträger (124) aktivierbar und deaktivierbar ist.

12. Vorrichtung nach dem vorhergehenden Anspruch, wobei der Zeichenträger ein lichtdurchlässiger aktiver Schirm ist, der das undurchsichtige Zeichen wahlweise anzeigen kann.

13. Vorrichtung nach dem vorhergehenden Anspruch, wobei der lichtdurchlässige Schirm ein Flüssigkristallschirm ist.

14. Vorrichtung nach Anspruch 9, wobei der Zeichenträger ein Raster aus sich wiederholenden und regelmäßigen Mustern umfasst.

15. Vorrichtung nach dem vorhergehenden Anspruch, wobei der Zeichenträger eine Hartmann-Matrix umfasst.

16. Vorrichtung nach einem der Ansprüche 9 bis 14, wobei der Zeichenträger eine optische Figur aufweist, deren maximale Abmessung über alles im Bereich von 2 bis 10 mm liegt.

17. Vorrichtung nach dem vorhergehenden Anspruch, wobei die geometrische Figur einen Flächeninhalt im Bereich von 3 bis 80 mm$^2$ abdeckt.

18. Vorrichtung nach einem der zwei vorhergehenden Ansprüche, wobei die geometrische Figur eine von einem Punkt oder einem Kreuz verschiedene Form ist, die von einem markierten Bezugspunkt einer ophthalmischen Linse visuell unterschieden werden kann.

19. Vorrichtung nach einem der Ansprüche 14 bis 17, wobei die geometrische Figur ein Polygon, vorzugsweise ein Dreieck ist.

20. Vorrichtung nach einem der Ansprüche 14 bis 17, wobei die geometrische Figur ein Kreis oder ein Oval ist.

21. Vorrichtung nach einem der Ansprüche 1 bis 3, wobei die Messmittel von dem Typ sind, der durch Interferometrie arbeitet.

22. Vorrichtung nach einem der vorhergehenden Ansprüche, die Mittel umfasst, um einen Greifstift an einer durch Rechnung bestimmten Stelle auf einer vorderen Fläche der ophthalmischen Linse anzuordnen.

23. Vorrichtung nach dem vorhergehenden Anspruch, wobei die Greifstift-Anordnungsmittel automatische Mittel sind.

24. Vorrichtung nach Anspruch 21, wobei die Greifstift-Anordnungsmittel Betätigungsmittel mit manueller Steuerung sind.

25. Vorrichtung nach einem der vorhergehenden Ansprüche, die Anzeigemittel umfasst, die durch das elektronische und datenverarbeitende System gesteuert werden, um die wenigstens teilweise korrigierte Geometrie des von den Erfassungsmitteln (122, 125, C) wahrgenommenen Schattens anzuzeigen.

26. Vorrichtung nach dem vorhergehenden Anspruch, wobei das elektronische und datenverarbeitende System die Anzeigemittel steuert, um den Umriss der Linse anzuzeigen, ohne sich auf die Berechnung der geometrischen Korrektur zu stützen.

27. Vorrichtung nach einem der vorhergehenden Ansprüche, wobei das elektronische und datenverarbeitende System Bilderkennungsbefehle enthält, die den Schatten einer Markierung der ophthalmischen Linse, der von den Erfassungsmitteln (122, 125, C) wahrgenommen wird, erkennen können und darauf die Berechnung der geometrischen Korrektur anwenden können, um daraus seine korrigierte Position in einem bekannten Bezugssystem abzuleiten, die im Wesentlichen der Position entspricht, die der Schatten dieser Markierung in diesem Bezugssystem bei Abwesenheit der Ablenkleistung der Linse aufweisen würde.

28. Vorrichtung nach einem der vorhergehenden Ansprüche, wobei die Bilderkennungsbefehle den Schatten einer Zentrierungs- und/oder Ausrichtmarkierung der ophthalmischen Linse, der durch die Erfassungsmittel (122, 125, C) wahrgenommen wird, erkennen können.

29. Vorrichtung nach einem der vorhergehenden Ansprüche, wobei die Bilderkennungsbefehle den Schatten einer Referenzmarkierung für die Fernsicht oder für die Nahsicht der ophthalmischen Linse, der durch die Erfassungsmittel (122, 125, C) wahrgenommen wird, erkennen können.

30. Verfahren zum korrigierten Erfassens des Schattens einer ophthalmischen Linse (103), die eine oder mehrere Markierungen (TC) aufweist, das die folgenden Schritte umfasst:

   - Beleuchten der Linse mit einem Lichtstrahlenbündel;
   - Messen der optischen Ablenkleistung, die die ophthalmische Linse auf wenigstens einen auftreffenden Lichtstrahl des Strahlenbündels anwendet,
   - Ableiten aus der gemessenen Ablenkleistung durch Berechnen einer korrigierten Geometrie wenigstens eines Teils des Schattens der ophthalmischen Linse, die mit dem Lichtstrahlenbündel beleuchtet wird.

31. Verfahren nach dem vorhergehenden Anspruch, wobei die korrigierte Geometrie im Wesentlichen der Geometrie entspricht, die der Schatten der Linse aufweisen würde, wenn diese Linse keine Ablenkleistung besäße.

32. Verfahren nach einem der vorhergehenden Ansprüche, wobei die Ablenkleistung, die die ophthalmische Linse auf wenigstens drei verschiedene Lichtstrahlen anwendet, die an drei nicht aufeinander ausgerichteten Punkten durch die Linse laufen, gemessen wird.

33. Verfahren nach einem der drei vorhergehenden Ansprüche, wobei zum Messen der Ablenkleistung der ophthalmischen Linse Deflektometriemittel verwendet werden.

34. Verfahren nach dem vorhergehenden Anspruch, wobei zum Messen der Ablenkleistung der ophthalmischen Linse die ophthalmische Linse beleuchtet wird und der Schatten der Linse auf Erfassungsmitteln (122, 125, C) gesammelt wird, wobei ein Strahlenbündeltrenner zwischen den Erfassungsmitteln und der Linse angeordnet ist.

**35.** Verfahren nach einem der Ansprüche 30 bis 32, wobei zum Messen der Ablenkleistung der ophthalmischen Linse Interferometriemittel verwendet werden.

**36.** Verfahren nach einem der Ansprüche 30 bis 35, wobei dann, wenn die ophthalmische Linse vom multifokalen Typ ist, die geometrische Korrektur auf wenigstens eine Referenzmarkierung für die Nahsicht oder die Fernsicht der multifokalen ophthalmischen Linse angewendet wird, um eine korrigierte Position dieser Markierung zu erhalten.

**37.** Verfahren nach einem der Ansprüche 30 bis 36, wobei die geometrische Korrektur auf den Schatten wenigstens einer Zentrierungs- und/oder Ausrichtungsmarkierung der ophthalmischen Linse angewendet wird, um eine korrigierte Position dieses Schattens zu erhalten.

**38.** Verfahren nach dem vorhergehenden Anspruch, wobei auf einem Visualisierungsschirm (105) ein virtuelles Bild (200), das den gewünschten Umriss nach dem Ausschneiden der Linse repräsentiert, angezeigt wird und die Position dieses Umrissbildes in Bezug auf die korrigierte Position des Schattens der Zentrierungsmarkierung der Linse bezeichnet wird.

**39.** Verfahren nach einem der Ansprüche 30 bis 38, das einen Schritt zum Anzeigen der korrigierten Geometrie des Schattens der Linse auf einem Visualisierungsschirm (105) umfasst.

**40.** Verfahren nach dem vorhergehenden Anspruch, wobei in dem Anzeigeschritt der Schatten des Umrisses der Linse auf einem Visualisierungsschirm (105) angezeigt wird, ohne sich auf die Berechnung der geometrischen Korrektur zu stützen.

**41.** Verfahren nach einem der Ansprüche 30 bis 40, das einen Schritt des Erkennens des Schattens einer Markierung der ophthalmischen Linse und einen Schritt des Anwendens der Berechnung der geometrischen Korrektur auf diesen Schatten der Markierung, um daraus seine korrigierte Position in einem bekannten Bezugssystem abzuleiten, umfasst, wobei diese korrigierte Position im Wesentlichen der Position entspricht, die in diesem Bezugssystem der Schatten dieser Markierung bei Abwesenheit der Ablenkleistung der Linse aufwiese.

**42.** Verfahren nach dem vorhergehenden Anspruch, das auf die automatische Zentrierung der Linse angewendet wird, wobei der erkannte Schatten jener einer Zentrierungs- und/oder Ausrichtungsmarkierung der ophthalmischen Linse ist.

**Claims**

**1.** Device for corrected acquisition of the shadow of an ophthalmic lens (103) possessing one or more marks (PC), the device comprising:

- receiver means (121, 114) for receiving said ophthalmic lens,
- on either side of said receiver means, firstly lighting means (S) for illuminating the ophthalmic lens (103) installed on said receiver means (121, 114), and secondly acquisition means (122, 125, C) for acquiring the shadow of said ophthalmic lens illuminated by the lighting means (S), and
- measurement means (S, 124, C) suitable for measuring the optical deflection power exerted by the ophthalmic lens installed on said receiver means (121, 114) on at least one light ray emitted by said lighting means (S), and for delivering a signal representative of said deflection power, and
- an electronic and computer system comprising geometrical correction calculation instructions for deducing from said measured deflection power a corrected shape for at least a portion of the shadow of the ophthalmic lens as perceived by the acquisition means (122, 125, C).

**2.** The device according to the preceding claim, in Which said corrected shape corresponds substantially to the shape that the shadow of said lens would present if said lens did not possess any deflection power.

**3.** The device according to any preceding claim, in which the measurement means (S, 124, C) are suitable for measuring the deflection power exerted by the ophthalmic lens on at least three light rays passing through the lens at three points that are not in alignment.

4. The device according to any preceding claim, in which the measurement means are of the type proceeding by deflectometry.

5. The device according to the preceding claim, in which the deflectometry measurement means comprise at least one beam separator located between the lens receiver means (121, 114) and the acquisition means (122, 125, C).

6. The device according to the preceding claim, in which the deflectometry measurement means comprise said acquisition means (122, 125, C).

7. The device according to any preceding claim, in which the acquisition means comprise a projection screen (122) and an image acquisition system (C, 125) arranged to sense the image on said projection screen.

8. The device according to any preceding claim, in which said receiver means, said lighting means, said acquisition means, and said measurement means are held stationary relative to one another.

9. The device according to any preceding claim, having a single light path between said lighting means and said acquisition means.

10. The device according to any one of claims 4 to 8, in which said beam separator is a support (124) for at least one sign (124A, 124B) located between said receiver means and said acquisition means, and in which the geometrical correction relationship calculated by said electronic and computer system is a function of the deformed shadow of the sign (124A, 124B) perceived by the acquisition means (122, 125, C).

11. The device according to the preceding claim, in which the sign support (124) is activatable and deactivatable.

12. The device according to the preceding claim, in which said sign support is a transparent active screen suitable for selectively displaying said opaque sign.

13. The device according to the preceding claim, in which said transparent screen is a liquid crystal screen.

14. The device according to claim 9, in which said sign support has a regular array of repeated patterns.

15. The device according to the preceding claim, in which said sign support comprises a Hartmann matrix.

16. The device according to any one of claims 9 to 14, in which said sign support includes a geometrical figure having a maximum overall dimension lying in the range 2 mm to 10 mm.

17. The device according to the preceding claim, in which the geometrical figure covers an area lying in the range 3 $mm^2$ to 80 $mm^2$.

18. The device according to either one of the two preceding claims, in which the geometrical figure is of a shape different from a point or a cross, being suitable for being visually distinguished from a marking made on an ophthalmic lens.

19. The device according to any one of claims 14 to 17, in which the geometrical figure is a polygon, preferably a triangle.

20. The device according to any one of claims 14 to 17, in which the geometrical figure is a circle or an oval.

21. The device according to any one of claims 1 to 3, in which the measurement means are of the type operating by interferometry.

22. The device according to any preceding claim, comprising means for placing a handling peg at a location that is determined by calculation on the front face of said ophthalmic lens.

23. The device according to the preceding claim, in which said means for placing the handling peg are automatic means.

24. The device according to claim 21, in which said means for placing the handling peg are manually controlled manipulation means.

25. The device according to any preceding claim, comprising display means driven by the electronic and computer system to display the at least partially corrected shape of the shadow perceived by the acquisition means (122, 125, C).

26. The device according to the preceding claim, in which the electronic and computer system drives the display means for displaying the outline of the lens without applying the geometrical correction calculation thereof.

27. The device according to any preceding claim, in which the electronic and computer system includes image recognition instructions suitable for recognizing the shadow of a mark of the ophthalmic lens as perceived by the acquisition means (122, 125, C) and for applying said geometrical correction calculation thereto so as to deduce therefrom its corrected position in a known frame of reference corresponding substantially to the position that the shadow of said mark would present in said frame of reference in the absence of the lens having any deflection power.

28. The device according to the preceding claim, in which the image recognition instructions are suitable for recognizing the shadow of a center and/or axis mark of the ophthalmic lens as perceived by the acquisition means (122, 125, C).

29. The device according to either one of the two preceding claims, in which the image recognition instructions are suitable for recognizing the shadow of a reference mark for far vision or for near vision on the ophthalmic lens as perceived by the acquisition means (122, 125, C).

30. A method of correcting acquisition of the shadow of an ophthalmic lens (103) presenting one or more marks (PC), the method comprising the following steps:

· illuminating the lens by a light beam;
· measuring the optical deflection power exerted by the ophthalmic lens on at least one incident light ray of said beam; and
· from the measured deflection power, deducing by calculation a corrected shape for at least a portion of the shadow of said ophthalmic lens as illuminated by said light beam.

31. A method according to the preceding claim, in which said corrected shape corresponds substantially to the shape that the shadow of said lens would present if said lens did not possess any deflection power.

32. A method according to either one of the two preceding claims, in which a measurement is made of the deflection power exerted by the ophthalmic lens on at least three distinct light rays passing through the lens at three points that are not in alignment.

33. A method according to any one of the three preceding claims, in which, in order to measure the deflection power of the ophthalmic lens, use is made of deflectometer means.

34. A method according to the preceding claim, in which, in order to measure the deflection power of the ophthalmic lens, the ophthalmic lens is illuminated and the shadow of the lens is sensed on acquisition means (122, 125, C), a beam separator being disposed between said acquisition means and the lens.

35. A method according to any one of claims 30 to 32, in which, in order to measure the deflection power of the ophthalmic lens, use is made of interferometer means.

36. A method according to any one of claims 30 to 35, in which, for an ophthalmic lens of the multifocal type, the geometrical correction is applied to at least one reference mark for near vision or for far vision of the multifocal ophthalmic lens in order to obtain a corrected position for said mark.

37. A method according to any one of claims 30 to 36, in which the geometrical correction is applied to the shadow of at least one center and/or axis mark of the ophthalmic lens in order to obtain a corrected position for said shadow.

38. A method according to the preceding claim, in which, a virtual image (200) representative of the outline desired after the lens has been cut to shape is displayed on a display screen (105), and the position of said outline image is identified relative to the corrected position for the shadow of the centering mark on the lens.

**39.** A method according to any one of claims 30 to 38, including a step of displaying the corrected shape of the shadow on the lens on a display screen (105).

**40.** A method according to the preceding claim, in which, during said display step, the shadow of the outline of the lens is displayed on a display screen (105) without applying the geometrical correction calculation thereto.

**41.** A method according to any one of claims 30 to 40, including a step of recognizing the shadow of a mark on the ophthalmic lens and a step of applying the geometrical correction calculation to said mark shadow so as to deduce therefrom its corrected position in a known frame of reference, said corrected position corresponding substantially to the position that the shadow of said mark would present in said frame of reference in the absence of the lens having any deflection power.

**42.** A method according to the preceding claim, applied to automatically centering the lens, in which the recognized shadow is that of a center and/or axis mark of the ophthalmic lens.

Fig.1

Fig.2

126

1

S

123

2

Fig.2

103

121

124

122

3

C

125

3

124

124B

124A

Fig.3

Acquisition Image 1

Acquisition Image 2

Acquisition Image N-1

Activation des motifs

Acquisition Image N

Extinction des motifs

Calcul de correction sur l' image N

Fig.4

(θ)

PC

Y

0 → X

121

103

Fig.5A

## Fig.5B

## Fig.5C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0409760 A

- EP 1167942 A